# EUROPÄISCHE PATENTSCHRIFT

(11) **EP 1 119 274 B1**
(45) Veröffentlichungstag und Bekanntmachung des Hinweises auf die Patenterteilung: **14.05.2003**
(21) Anmeldenummer: 99947448.9
(22) Anmeldetag: 01.10.1999
(51) Int. Cl.: A47C 7/18, A47C 7/20

(54) **POLSTERTRÄGER**
UPHOLSTERY SUPPORT
SUPPORT DE REMBOURRAGE

(30) Priorität: 05.10.1998 DE 19845730
(43) Veröffentlichungstag der Anmeldung: 01.08.2001
(73) Patentinhaber: AUDI AG, 85045 Ingolstadt (DE)
(72) Erfinder: PETERSDORFF, Heiko, D-85101 Lenting (DE); SCHRAMM, Christian, D-85110 Kipfenberg (DE)
(74) Vertreter: Geissler, Manfred
(86) Internationale Anmeldenummer: EP9907288
(87) Internationale Veröffentlichungsnummer: WO00019865

(56) Entgegenhaltungen:
- WO-A-91/10383
- US-A- 3 363 943
- US-A- 4 099 278

## Beschreibung

Die Erfindung betrifft einen Polsterträger für einen Sitz oder eine Sitzbank, insbesondere zur Verwendung in einem Fahrzeug.

Ein derartiger Polsterträger ist beispielsweise bekannt aus der DE 195 41 999-A1 (B64D11/06). Dort wird ein als Sitzteil ausgeführter Polsterträger beschrieben, der in Form einer Schale ausgeführt ist und aus Kunststoff oder Blech bestehen kann. Der dort beschriebene Polsterträger ist bevorzugt Bestandteil eines Fluggastsitzes. Daraus kann abgeleitet werden, daß mit der dort beschriebenen Konfiguration eine besonders leichte Bauweise möglich ist.

Ein anderer Aufbau für einen Leichtbausitz ist beschrieben worden in dem Vortrag "Moderne Faserwerkstoffe und Kunststoffe am Fahrzeugsitz" (Kmitta - Haus der Technik - Tagung Fahrzeugsitze vom 27./28. September 1994 - Veranstaltungsnummer 30-735-056-4). In der Abbildung 15 wird eine sogenannte Hybridlehne gezeigt, bei der als Polsterträger ein kraft- und drehmomentübemehmendes Metallstrukturteil verwendet wird, das mit flächig versteifendem Polyurethan-Hartschaum verbunden ist. Die dort gezeigte Metallstruktur ist hinsichtlich ihres Aufbaus vergleichbar mit einem Leichtbausitz, der in der Autozeitung 10/97 auf der Seite 52 beschrieben wird. Das dort gezeigte Sitzgestell ist im wesentlichen konventionell ausgeführt und wird zur Reduzierung von Gewicht aus Leichtmetall, bevorzugt einem Magnesium-Druckguß, hergestellt.

Aus den Patentschriften US 5100204 und US 4568124 sind Polsterträger bekannt, die zur Realisierung einer Leichtbauweise als Hohlkörper ausgebildet sind. In der US 4568124 wird die relativ labile Konstruktion genutzt, um gezielt Luftdämpfungseigenschaften herstellen zu können. Bei der US 5100204 sind zur Stabilisierung des Polsterträgers an diesem außen Verstärkungselemente aufgebracht.

Die DE-9012858.3-U1 zeigt einen einlagig ausgeführten Polsterträger, an dem zur Ausbildung einer Lendenwirbelstütze eine Tasche angeformt ist, in die ein bevorzugt aus Hartschaum hergestelltes Absorberelement einsteckbar ist.

Der Erfindung liegt die Aufgabe zugrunde, für Polsterträger von Sitzen oder Sitzbänken einen weiteren Weg zur Gewichtsreduzierung aufzuzeigen.

Diese Aufgabe wird gelöst mit einem Polsterträger gemäß den Merkmalen des Patentanspruchs 1. Die Unteransprüche betreffen besonders zweckmäßige Weiterbildungen der Erfindung.

Erfindungsgemäß wird der Polsterträger als Sandwichaufbau ausgeführt, bei dem eine ein Weichpolster großflächig aufnehmende Formschale einerseits und ein Rückwandelement andererseits zwischen sich ein Formschaumteil einschließen. Dieses Formschaumteil ist bevorzugt als Hartschaum mit einem sogenannten Raumgewicht von 10-30 Gramm pro Liter ausgeführt. Das Hartschaumteil kann dabei entweder als Einlegeteil ausgeführt sein, das zwischen die Formschale und das Rückwandelement gelegt wird oder aber in einen aus der Formschale und dem Rückwandelement gebildeten Hohlraum eingeschäumt sein.

Ein besonderer Vorteil des erfindungsgemäßen Polsterträgers ist darin zu sehen, daß mit ganz konventionellen Umformtechniken die Formschale und das Rückwandelement beispielsweise aus Leichtmetall-Blechplatinen herstellbar sind. Ebenso kann ein entsprechend konturierter Hartschaumblock konventionell gefertigt sein und dann entweder als loses Teil zwischen die Blechformkörper gelegt oder aber an wenigstens einen der Blechformkörper angeklebt werden. Die Verbindung der Blechteile untereinander kann beispielsweise durch Kleben und/oder Nieten und/oder Schweißen und/oder Falzen erreicht werden.

Nach einer bevorzugten Weiterbildung der Erfindung ist beispielsweise die Formschale insbesondere im Bereich einer den Insassenkörper aufnehmenden Mulde partiell gelocht. Durch diese Lochung wird einerseits eine weitere Gewichtsreduktion erreicht und andererseits auch dafür gesorgt, daß durch Schwitzen des Insassen entstehende Feuchtigkeit in das Hartschaumteil hinein entweichen kann. Dem erfindungsgemäßen Polsterträger kann damit auch eine Klimafunktion zugewiesen werden.

Durch die hier vorgeschlagene Sandwichbauweise wird bei sehr niedrigem Baugewicht eine äußerst hohe Festigkeit erzeugt, und zwar insbesondere deshalb, weil der Polsterträger insgesamt - also gegebenenfalls ausgenommen von Randbereichen - sehr dickwandig ausgeführt werden kann. Besonders hervorzuheben ist dabei die Tatsache, daß durch die Vorkonturierung der Formschale der Raumbedarf des Weichschaums für die Polsterung reduziert werden kann. Bezogen auf konventionelle Sitzkonstruktionen wird also das Bauvolumen deutlich anders ausgenutzt. Es ergibt sich bei Einsatz erfindungsgemäßer Polsterträger ein deutlich größerer Anteil an Bauvolumen für den Polsterträger und ein demgegenüber wesentlich kleinerer Anteil für die Weichschaumpolsterung, ohne daß Komforteinbußen hingenommen werden müssen.

Für die Fertigung und Montage erfindungsgemäßer Polsterträger von besonderer Bedeutung sind Hartschaumteile, die nach Art eines Aggregateträgers ausgeführt sind. So können beispielsweise Halterungselemente für die Weichschaumpolsterung, Kopfstützenführung oder Halterungen für Gurtaufrollautomaten und gegebenenfalls Metallversteifungselemente von vornherein mit eingeschäumt sein. Ein so hergerichteter Aggregateträger kann komplett vormontiert zwischen die Formschale und das Rückwandelement zur Erzeugung eines weiteren Unterzusammenbaus gelegt werden. Anschließend kann durch einfache Verklipsungen oder konventionelle Abspannungen die Weichschaumpolsterung an entsprechend vorbereiteten Halterungen befestigt werden. Vorstellbar ist aber auch eine Befestigung der Weichschaumpolsterung mittels Verklebung.

Der bevorzugte Anwendungsfall für die erfindungsgemäßen Polsterträger sind Rückenlehnen für die Rücksitzbänke von Kraftfahrzeugen. In diesem Zusammenhang von herausgehobener Bedeutung ist die Tatsache, daß beispielsweise hinter der Rücklehne mitgeführtes Ladegut bei einer plötzlichen Fahrzeugverzögerung auf einen Polsterträger trifft, der einerseits im Hinblick auf diese Beanspruchungen relativ steif ist und andererseits insbesondere bei eingeschäumten Gelenkzapfen energieabsorbierend in die Fahrzeugstruktur eingebunden werden kann. Zum Abbau von crashbedingten Lastspitzen beim Auftreffen lose mitgeführter Ladungsstücke müssen dementsprechend keine konstruktiven Änderungen oder Ergänzungen an der Fahrzeugkarosserie vorgenommen werden. Insgesamt ergibt sich also ein Polsterträger mit hoher Steifigkeit und großer Verformbarkeit zugleich. Die gesamte Struktur des Trägers allein hat also ein hohes Energieaufnahmepotential.

Ein vorteilhaftes Ausführungsbeispiel der Erfindung ist in der Zeichnung dargestellt. Es zeigt
- Figur 1:: Wesentliche Elemente eines erfindungsgemäßen Polsterträgers in einer Explosionsdarstellung,
- Figur 2:: einen Polsterträger als Bestandteil einer aufgepolsterten Rückenlehne,
- Figur 3:: eine Ansicht gemäß Schnittebene III/III in Figur 2 und
- Figur 4:: ein als Aggregateträger ausgeführtes Formschaumteil für den erfindungsgemäßen Polsterträger,
- Figur 5:: bevorzugte Anwendungsfälle für erfindungsgemäße Polsterträger.

In allen Figuren weisen gleiche Bauteile oder Bauteilabschnitte die gleiche Bezifferung auf.

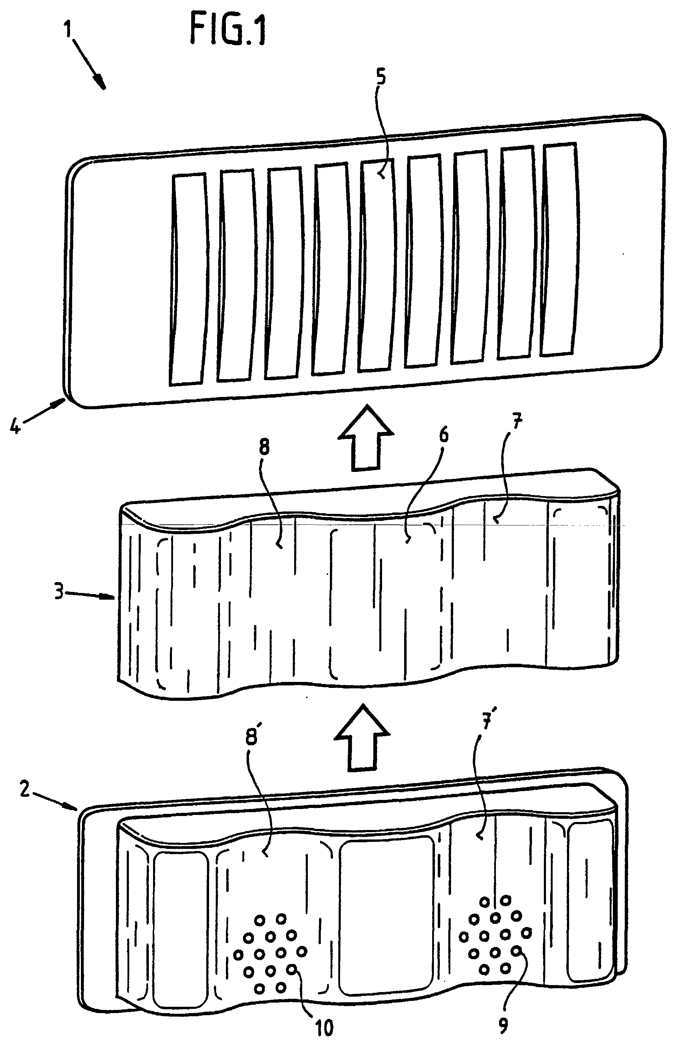

Wesentliche Bestandteile eines in Figur 1 insgesamt mit 1 bezeichneten Polsterträgers sind eine Formschale 2, ein Formschaumteil 3 und ein Rückwandelement 4. Letzeres weist hier eine Verrippung 5, auf die aber gegebenenfalls auch entbehrlich sein kann. Damit könnte beispielsweise als Rückwandelement 4 auch eine einfache ebene Blechplatine verwendet werden.

Das Formschaumteil 3 ist hinsichtlich seiner Konturierung an das Rückwandelement 4 und die Formschale 2 angepaßt und wird bevorzugt aus EPP oder vergleichbaren Hartschaumwerkstoffen hergestellt. Deren Raumgewicht beträgt bei besonders vorteilhaften Ausführungsbeispielen zwischen 10 und 30 Gramm pro Liter. Besonders darauf hinzuweisen ist, daß nicht zwangsläufig die Dichte oder Porigkeit des Schaums homogen über das gesamte Bauvolumen des Formschaumteils 3 verteilt sein muß. So kann beispielsweise in einem Übergangsbereich 6 zwischen Mulden 7 und 8 die Schaumhärte reduziert werden. Durch gezielte Inhomogenitäten in dem Formschaumteil 3 kann so dafür gesorgt werden, daß mit einem Minimum an Schaumwerkstoffmaterial ein Maximum an Festigkeit und auch eine homogene Verformbarkeit erreicht wird.

Die Mulden 7' und 8' in der Formschale 2 sind hier mit beispielsweise durch Stanzung oder Laserschneiden erzeugten Lochmusterungen 9 und 10 versehen. Deren Flächenanteil an der Mulde beträgt bevorzugt zwischen 5 und 35 %. Die Durchmesser der einzelnen Löcher betragen beispielsweise zwischen 20 und 50 mm.

Durch diese Maßnahme ergibt sich eine zusätzliche Gewichtseinsparung für die Formschale 2. Außerdem kann mit einer derartigen Siebstruktur am Insassenkörper durch Schwitzen entstehende Feuchtigkeit wirkungsvoll abgeführt werden. Im übrigen können Löcher auch außerhalb der Mulde in gering belasteten Bereichen vorgesehen werden. Hauptkraftflußrichtungen bleiben hingegen ungelocht. Auch das Rückwandelement 4 kann gelocht sein.

Für das Rückwandelement 4 und die Formschale 2 werden als Ausgangsmaterial bevorzugt Aluminium-Blechplatinen mit einer Stärke von 0,5 bis 1,5 mm verwendet. Die Dicke des Formschaumteils 3 beträgt in der Mitte der Mulden 7 und 8 bevorzugt 20 bis 40 mm und an den Muldenrändern, also beispielsweise im Übergangsbereich 6, 80 bis 100 mm.

Aus der Darstellung in Figur 1 ist ersichtlich, daß hier der Polsterträger im wesentlichen quaderförmig aufgebaut ist. Auf diese Form sind erfindungsgemäße Polsterträger jedoch nicht festgelegt. So können beispielsweise für Busse auch mehr als zwei nebeneinanderliegende Mulden vorgesehen werden und außerdem an den äußeren Rändern die Mulden in der Weise angestellt werden, daß sich in der Draufsicht für das Formschaumteil 3 beispielsweise die Form eines U ergibt. Ebenso können für Campingfahrzeuge oder Eisenbahnwaggons die Polsterträger für Rückenlehnen als Eckelemente ausgeführt sein.

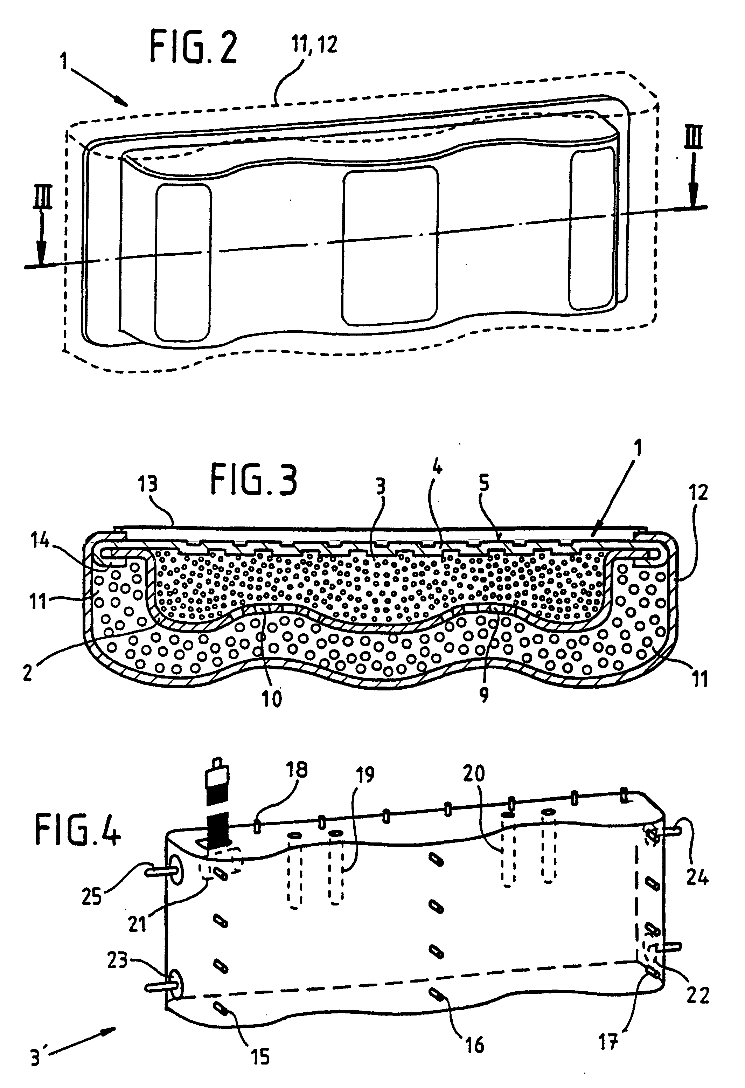

Die Figuren 2 und 3 zeigen den erfingungsgemäßen Polsterträger 1 zusammen mit einer Weichschaum-Aufpolsterung 11, die von einem Textilbezug 12 überdeckt wird und zusammen mit diesem über konventionelle Spannelemente 13 (aus Gründen der Übersichtlichkeit ist hier nur eines dargestellt) gegen den Polsterträger 1 festgelegt ist. Bei dem in Figur 3 dargestellten Ausführungsbeispiel ist die Formschale 2 durch eine umlaufende Falz 14 an dem Rückwandelement 4 befestigt. Alternativ oder ergänzend können aber auch Verbindungen mittels Verklebung, Verschweißung, Vernietung, Clinchen oder dergleichen vorgesehen werden. Ebenso denkbar ist die Aufweitung eines topfförmigen Halbzeuges, das per Innenhochdruckumformung zu einem einteilig ausgebildeten Hohlkörper umgeformt wird, der dann beispielsweise die in Figur 3 dargestellte Form aufweist. In Analogie hierzu kann für einen beispielsweise aus Kunststoff hergestellten Hohlkörper die gewünschte Geometrie durch Blasformen erzeugt werden, wie dies beispielsweise für die Fertigung von Kraftstofftanks bekannt ist.

Die in Figur 2 gezeigte Skizze macht deutlich, daß hinsichtlich des erforderlichen Bauvolumens für Sitze mit erfindungsgemäß ausgeführten Polsterträgern 1 keinerlei Vergrößerungen gegenüber konventionellen Konzepten zu erwarten sind, so daß insbesondere die Komfortmaße in den Insassenzellen von Kleinfahrzeugen nicht negativ beeinflußt werden. Außerdem unterliegt auch die Gestaltung des Designs keinerlei Einschränkungen.

Von herausgehobener Bedeutung ist, das in Figur 4 dargestellte Formschaumteil 3', das hier als sogenannter Aggregateträger ausgeführt ist. Als Aggregate werden hier Funktionselemente bezeichnet, die einerseits zur Befestigung beziehungsweise Halterung von Zubehörteilen wie Sicherheitsgurten und Kopfstützen vorgesehen sind und andererseits der Einbindung des Polsterträgers 1 in die Fahrzeugkarosserie dienen. Darüber hinaus werden auch Befestigungselemente zur Festlegung von Polsterteilen wie beispielsweise Klipse und Knöpfe zu diesen Funktionselementen gezählt. Schematisch angedeutet in Figur 4 sind beispielsweise vertikal verlaufende Druckknopfreihen 15 bis 17 und eine horizontal verlaufende Druckknopfreihe 18, an denen das mit den entsprechenden Gegenstücken (hier nicht dargestellt) ausgerüstete Weichschaumpolster 11 gehalten wird. Darüber hinaus sind eingeschäumte Kopfstützenführungen 19 und 20 vorgesehen, die im wesentlichen Baugleich aus konventionellen Sitzgestellen übernommen werden können. Ebenso ist hier schematisch ein Gurtaufrollautomat 21 angedeutet, der an einer in dem Formschaumteil 3' eingeschäumten Befestigungsplatte anmontiert ist. Analog dazu können beispielsweise auch für integrierte Kindersitze Doppelrollensysteme in das Formschaumteil 3' eingelassen werden, wie sie beispielsweise aus der DE195 37 169 (B60N2/26) bekannt sind. Die Anlenkung eines mit dem Formschaumteil 3' ausgeführten Polsterträgers an der Fahrzeugkarosserie erfolgt in einem unteren Bereich mittels Schwenklagerelementen 22, 23 und im Bereich der Lehnenoberkante über Haltezapfen 24, 25. Die Anbindungen an die Karosseriestruktur sind aber auch über starre oder verstellbare Beschläge, wie sie beispielsweise von Vordersitzarmstrukturen bekannt sind, möglich. Lehnenschlösser konnten dann entfallen.

Alle Funktionselemente können als gesamter Bauteileumfang in eine Werkzeugform eingelegt und direkt umschäumt werden. Weitere Montage- beziehungsweise Füge- und Befestigungsvorgänge können dann also komplett entfallen. Wichtig ist in diesem Zusammenhang noch, daß an der Formschale 2 und an dem Rückwandelement 4 keine nennenswerten Änderungen vorgenommen werden müssen. Durch einfach zu erstellende Lochungen kann an diesem für die Durchtritte der in den Figur 4 dargestellten Funktionsemlemente gesorgt werden.

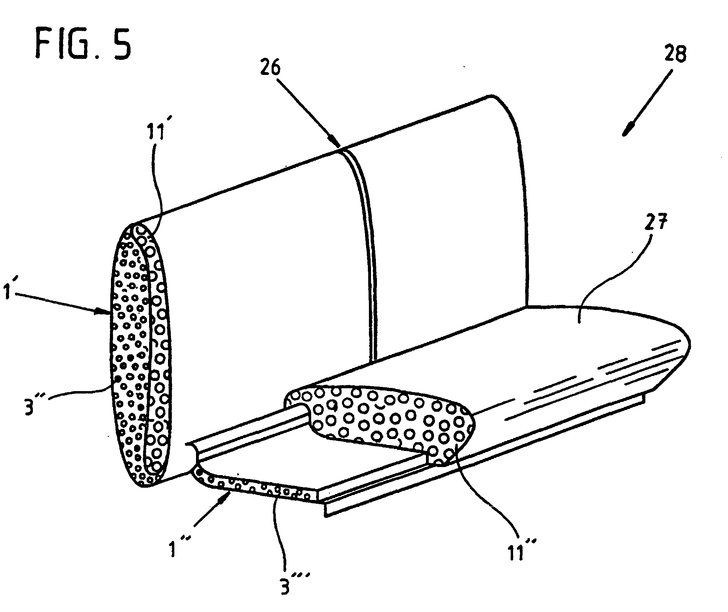

Der Einsatz erfindungsgemäßer Polsterträger ist nicht auf die Anwendung von Rückenlehnen beschränkt, wie sie in den Figuren 1 bis 4 skizziert sind. Vorstellbar sind auch Ausführungen als geteilte Rückenlehne 26 oder aber der Einsatz von erfindungsgemäßen Polsterträgem in ein Gesäßteil 27 eines Fahrzeugsitzes 28, wie er beispielhaft in Figur 5 skizziert ist. Analog zu den übrigen Zeichnungen sind funktionell gleiche Bauteile gleich beziffert und um hochgestellte Striche ergänzt.

## Patentansprüche

1. Polsterträger (1) für einen Sitz oder eine Sitzbank, insbesondere zur Verwendung in einem Fahrzeug, **gekennzeichnet durch** einen Sandwichaufbau mit einer einem Weichpolster (11) zugeordneten Formschale (2) und einem Rückwandelement (4) sowie wenigstens einem zwischen der Formschale (2) und dem Rückwandelement (4) angeordneten Formschaumteil (3).

2. Polsterträger nach Anspruch 1, **dadurch gekennzeichnet, daß** die Formschale (2) ein aus Leichtmetall oder Kunststoff hergestellter Formkörper ist.

3. Polsterträger nach Anspruch 1, **dadurch gekennzeichnet, daß** das Rückwandelement (4) ein aus Leichtmetall oder Kunststoff hergestellter Formkörper ist.

4. Polsterträger nach Anspruch 1, **dadurch gekennzeichnet, daß** das Formschaumteil (3) als ein aus Hartschaum hergestelltes Einlegeteil ausgeführt ist, dessen Oberfläche entsprechen der Gestalt von Rückwandelement (4) und/oder Formschale (2) konturiert ist.

5. Polsterträger nach Anspruch 1, **dadurch gekennzeichnet, daß** aus der Formschale (2) und dem Rückwandelement (4) ein Hohlkörper gebildet ist, in den das Formschaumteil durch Einschäumung eingebracht ist.

6. Polsterträger nach Anspruch 5, **dadurch gekennzeichnet, daß** der Hohlkörper durch Blasformung oder Innenhochdruckumformung erzeugt ist.

7. Polsterträger nach Anspruch 1, **dadurch gekennzeichnet, daß** die Gestalt der Formschale (2) zur Aufnahme eines Gesäßpolsters hergerichtet ist.

8. Polsterträger nach Anspruch 1, **dadurch gekennzeichnet, daß** die Gestalt der Formschale (2) zur Aufnahme eines Rückenlehnenpolsters hergerichtet ist.

9. Polsterträger nach Anspruch 4 oder 5, **dadurch gekennzeichnet, daß** die Formschale (2) und Rückwandelement (4) aus Aluminiumblech erzeugte Umformteile sind, die mittels einer Fügetechnik miteinander verbunden sind.

10. Polsterträger nach Anspruch 9, **dadurch gekennzeichnet, daß** die Formschale (2) und/oder das Rückwandelement (4) und/oder das Formschaumteil (3, 3') als ein Aggregateträger ausgebildet ist, an dem als Aggregate ein Kopfstützenträger beziehungsweise eine Kopfstützenführung und/oder eine Gurtaufrollvorrichtung und/oder ein Gurtschloß und/oder ein Gelenkschloß und/oder ein Gelenkzapfen und/oder ein Polsterbefestigungselement und/oder ein Lagerelement für ein Zubehörteil befestigt ist.

11. Polsterträger nach Anspruch 1, **dadurch gekennzeichnet, daß** die Formschale (2) und/oder das Rückwandelement (4) zumindest partiell eine Lochmusterung (9, 10) aufweist.

## Claims

1. Upholstery support (1) for a seat or bench, particularly for use in a vehicle, **characterized by** a sandwich structure comprising a moulded shell (2) associated with soft upholstery (11), a rear-wall element (4) and at least one moulded foam component (3) disposed between the moulded shell (2) and the rear-wall element (4).

2. Upholstery support according to Claim 1, **characterized in that** the moulded shell (2) is a moulded body made of light metal or plastic.

3. Upholstery support according to Claim 1, **characterized in that** the rear-wall element (4) is a moulded body made of light metal or plastic.

4. Upholstery support according to Claim 1, **characterized in that** the moulded foam component (3) is in the form of an insert made of high-resistance foam, its surface being contoured to correspond with the shape of rear-wall element (4) and/or moulded shell (2).

5. Upholstery support according to Claim 1, **characterized in that** a hollow body is formed from the moulded shell (2) and the rear-wall element (4), into which hollow body the moulded foam component is inserted by foaming-in.

6. Upholstery support according to Claim 5, **characterized in that** the hollow body is produced by blow moulding or internal high-pressure forming.

7. Upholstery support according to Claim 1, **characterized in that** the shape of the moulded shell (2) is such as to accommodate a seat pad.

8. Upholstery support according to Claim 1, **characterized in that** the shape of the moulded shell (2) is such as to accommodate a backrest pad.

9. Upholstery support according to Claim 4 or 5, **characterized in that** the moulded shell (2) and the rear-wall element (4) are shaped components produced from aluminium sheets, said shaped components being joined together by joining apparatus.

10. Upholstery support according to Claim 9, **characterized in that** the moulded shell (2) and/or the rear-wall element (4) and/or the moulded foam component (3, 3') is or are designed as unit supports, onto which a headrest support, that is to say a headrest guide, and/or a seatbelt-delivery device and/or a seatbelt fastening and/or a link lock and/or a link pin and/or an upholstery-fixing element and/or a bearing element for an accessory are fixed as units.

11. Upholstery support according to Claim 1, **characterized in that** the moulded shell (2) and/or the rear-wall element (4) has or have at least to some extent a pattern of perforations (9, 10).

## Revendications

1. Support de rembourrage (1) pour un siège ou une banquette, en particulier pour utilisation dans un véhicule, **caractérisé par** une construction en sandwich avec une coque moulée (2) associée à un coussin mou (11), et un élément de paroi arrière (4), ainsi qu'au moins une pièce moulée alvéolaire (3) disposée entre la coque moulée (2) et l'élément de paroi arrière (4).

2. Support de rembourrage selon la revendication 1, **caractérisé en ce que** la coque moulée (2) est un corps moulé fabriqué en métal léger ou en matière synthétique.

3. Support de rembourrage selon la revendication 1, **caractérisé en ce que** l'élément de paroi arrière (4) est un corps moulé fabriqué en métal léger ou en matière synthétique.

4. Support de rembourrage selon la revendication 1, **caractérisé en ce que** la pièce moulée alvéolaire (3) est réalisée sous la forme de pièce d'insert fabriquée en mousse dure, dont la surface est profilée de manière correspondante à la forme de l'élément de paroi arrière (4) et/ou de la coque moulée (2).

5. Support de rembourrage selon la revendication 1, **caractérisé en ce qu'**on forme, à partir de la coque moulée (2) et de l'élément de paroi arrière (4), un corps creux dans lequel on produit par moussage la pièce moulée alvéolaire.

6. Support de rembourrage selon la revendication 1, **caractérisé en ce que** le corps creux est produit par formage par soufflage, ou par reformage sous haute pression intérieure.

7. Support de rembourrage selon la revendication 1, **caractérisé en ce que** la forme de la coque moulée (2) est conçue pour recevoir un coussin d'assise.

8. Support de rembourrage selon la revendication 1, **caractérisé en ce que** la forme de la coque moulée (2) est conçue pour recevoir un coussin de dossier.

9. Support de rembourrage selon la revendication 4 ou 5, **caractérisé en ce que** la coque moulée (2) et l'élément de paroi arrière (4) sont des pièces obtenues par reformage, à partir de tôle d'aluminium, reliées entre elles par une technique de jointoiement.

10. Support de rembourrage selon la revendication 9, **caractérisé en ce que** la coque moulée (2) et/ou l'élément de paroi arrière (4) et/ou l'élément moulé alvéolaire (3, 3') est/sont réalisé(s) sous la forme de support d'agrégat, sur lequel, à titre d'agrégat, on fixe un support d'appui-tête ou un guidage d'appui-tête et/ou un dispositif d'enroulement de ceinture et/ou une fermeture de ceinture et/ou une fermeture d'articulation et/ou un téton d'articulation et/ou un élément de fixation de coussin et/ou un élément de palier.

11. Support de rembourrage selon la revendication 1, **caractérisé en ce que** la coque moulée (2) et/ou l'élément de paroi arrière (4) présentent au moins partiellement un motif de perforation (9, 10).
